Europäisches Patentamt

European Patent Office

Office européen des brevets

(11) Veröffentlichungsnummer: **0 293 580 B1**

(12) # EUROPÄISCHE PATENTSCHRIFT

(45) Veröffentlichungstag der Patentschrift: 04.09.91    (51) Int. Cl.5: **B26D 3/22**, A47J 43/25

(21) Anmeldenummer: 88105910.9

(22) Anmeldetag: 14.04.88

(54) **Raspel- oder Schneidwerkzeugsanordnung zum Zerkleinern von Nahrungsmitteln, insbesondere für Küchenmaschinen.**

(30) Priorität: 04.06.87 DE 3718728

(43) Veröffentlichungstag der Anmeldung:
07.12.88 Patentblatt 88/49

(45) Bekanntmachung des Hinweises auf die
Patenterteilung:
04.09.91 Patentblatt 91/36

(84) Benannte Vertragsstaaten:
AT CH DE ES FR GB IT LI NL

(56) Entgegenhaltungen:
DE-A- 3 020 242
FR-A- 2 582 497
US-A- 4 113 188

(73) Patentinhaber: **Braun Aktiengesellschaft
Rüsselsheimer Strasse 22
W-6000 Frankfurt/Main(DE)**

(72) Erfinder: **Golob, Jürgen
Hubenottenstrasse 76-78
W-6382 Friedrichsdorf(DE)**
Erfinder: **Franke, Wolfgang
Walter-Rietig-Strasse 41
W-6070 Langen(DE)**

**Beschreibung**

Die Erfindung bezieht sich auf eine Raspel- oder Schneidwerkzeuganordnung zum Zerkleinern von Nahrungsmitteln, insbesondere für Haushaltsgeräte, die mittels einer Wellenkupplung auf einer einen Behälter vom Boden her durchdringenden Antriebswelle drehfest aufsetzbar ist und die aus einer den Behälter in einen oberen und unteren Behälterabschnitt trennenden Scheibe, einem in einer Ausnehmung der Scheibe ausgebildeten Raspel- oder Schneidwerkzeug und einer den Abstand der Scheibe gegenüber dem Raspel- oder Schneidwerkzeug einstellbaren Stellvorrichtung besteht

Es ist bereits eine Schnitzelmesseranordnung für ein Nahrungsmittelbearbeitungsgerät mit einer Wellenkupplung bekannt (DE-A-30 20 242), die von oben her auf das Wellenende der Motorantriebswelle aufsetzbar ist und die mittels einer eine Drehverbindung aufweisenden Stellvorrichtung für unterschiedliche Schnittbreiten einstellbar ist. Bei der Verwendung von Raspel- bzw. Reibscheibeneinsätzen wird durch die stufenlose Einstellmöglichkeit jedoch kein gleichbleibender Abstand gewährleistet, so daß die bekannte Schneidwerkvorrichtung mit der zugehörigen Stellvorrichtung nicht universal einsetzbar ist. Ein weiterer Nachteil besteht darin, daß das Messer nur schwer gegen andere Schneidwerkzeuge, wie beispielsweise eines Pommes Frites-Schneidwerkzeugs, ausgetauscht werden kann. Hierzu müßten nämlich aufwendige Montage- bzw. Demontagearbeiten vorgenommen werden, die einer Hausfrau kaum zumutbar sind.

Demgegenüber liegt der Erfindung die Aufgabe zugrunde, eine Raspel- oder Schneidwerkzeuganordnung zu schaffen, bei der unterschiedliche Werkzeuge auf einfache Weise und in kürzester Zeit ausgetauscht werden können und bei der gleichzeitig eine Veränderung des Schneidspaltes möglich ist.

Diese Aufgabe wird erfindungsgemäß dadurch gelöst, daß die Stellvorrichtung in axialer Längsrichtung auf der Wellenkupplung ortsfest und drehbar gelagert und gleichzeitig über eine Verstelleinrichtung mit der Scheibe verbunden ist, daß sowohl die Wellenkupplung als auch die Scheibe über jeweils eine mit dem Raspel- oder Schneidwerkzeug zusammenwirkende Längsverzahnung in Eingriff stehen und daß sich das Raspel- oder Schneidwerkzeug an der Antriebswelle in axialer Richtung abstützt und gegenüber der Antriebswelle ortsfest gehalten wird.

Durch die Trennung des Reib- oder Schneidwerkzeugs von der Wellenkupplung, der Scheibe und der Stellvorrichtung wird ein schneller Austausch des Reib- oder Schneidwerkzeugs möglich, das nur im eingebauten Zustand über Längsverzahnungen mit der Scheibe und der Wellenkupplung drehfest in Eingriff steht und ansonsten bei abgenommenem Deckel leicht nach oben herausgenommen werden kann, ohne daß dabei die übrigen Bauteile beeinflußt werden.

Durch die vorteilhafte Verwendung einer Wellenkupplung läßt sich aber auch die gesamte Schneidvorrichtung ohne weiters von oben her auf die vom Motor antreibbare Welle aufsetzen und mittels der Stellvorrichtung auf unterschiedliche Breiten einstellen, da auf einfache Weise durch Drehen der Stellvorrichtung die Scheibe in Axialrichtung verschiebbar ist, während das Schneidwerkzeug im eingebauten Zustand seine Lage stets beibehält. Es lassen sich aber auch auf einfache Weise bei Verwendung einer Pommes Frites-Scheibe Pommes Frites verschiedener Dicke herstellen, da durch die Stellvorrichtung die Schneidwerkvorrichtung in kürzester Zeit auf die gewünschte Schneiddicke eingestellt werden kann, und zum anderen ein schneller Wechsel von einem Schneidmesser auf ein Pommes-Frites-Werkzeug möglich ist.

Soll beispielsweise das Schneidwerkzeug gegen ein anderes Werkzeug, beispielsweise ein Raspelwerkzeug, ausgewechselt werden, so ist in einer Weiterbildung der Erfindung vorgesehen, daß zwischen der Scheibe und dem Raspelwerkzeug eine Verriegelungsvorrichtung vorgesehen ist, die das Raspelwerkzeug gegenüber der Scheibe axial sichert und daß sich bei Verdrehung der Stellvorrichtung die Wellenkupplung axial verschiebt. Hierbei kann das Schneidwerkzeug ohne weiteres nach oben abgezogen und beispielsweise gegen ein Reibwerkzeug ausgetauscht werden. Die vorteilhafte Verwendung der Verriegelungsvorrichtung gestattet bei Einsatz des Raspelwerkzeuges nunmehr, daß die Schnittbreite konstant bleibt, auch dann, wenn die Stellvorrichtung betätigt wird. Die Betätigung der Stellvorrichtung hat nämlich bei Verwendung von Reibscheiben keinen Einfluß auf die Schnittbreitenverstellung bzw. auf die Verstellung der Scheibe, da sich nunmehr die Wellenkupplung zusammen mit der Stellvorrichtung gegenüber der Scheibe auf dieser axial verschiebt, wenn das Raspelwerkzeug auf der Scheibe mittels der Verriegelungsvorrichtung festgesetzt ist.

In vorteilhafter Weise ist die Stellvorrichtung an der äußeren Mantelfläche der Wellenkupplung zentriert, und an der Stellvorrichtung ist ein Ringwulst ausgebildet, der in eine an der Wellenkupplung ausgebildete Ringnut eingreift. Hierdurch ist die Wellenkupplung gegen axiales Verschieben auf der Stellvorrichtung gesichert. Die Stellvorrichtung wird auf die Wellenkupplung aufgeklipst und ist dann nahezu untrennbar mit dieser verbunden. Es können aber auch andere, aus dem Stand der Technik bekannte Befestigungsmittel, wie beispielsweise ein Sicherungsring, verwendet werden. Durch diese Befestigung bzw. Abstützung der Stellvorrichtung auf der Wellenkupplung wird bei Verwendung von verstellbaren Schneidwerkzeugen sichergestellt, daß beim Drehen der Stellvorrichtung die Scheibe sich gegenüber dem Werkzeug axial verschiebt, wodurch der Abstand zwischen dem Schneidwerkzeug und der Scheibe verändert wird und sich dabei die Wellenkupplung am freien Ende der Antriebswelle abstützt. Beim Austausch des Schneidwerkzeuges gegen ein Raspelwerkzeug wird durch das axiale Sichern der Scheibe mit dem Raspelwerkzeug mittels der Verriegelungseinrichtung nunmehr sichergestellt, daß lediglich bei Verdrehung der Stellvorrichtung die Wellenkupplung mit der Stellvorrichtung je nach Drehrichtung axial nach oben bzw. nach unten verschoben wird, während die Scheibe gegenüber dem Raspelwerkzeug unverstellbar bleibt.

In einer Weiterbildung der Erfindung ist vorgesehen, daß an der Stellvorrichtung ein Arretierungsring befestigt ist, der mit zumindestens einer radial nach innen gerichteten Nase versehen ist, die in eine an der Scheibe sich axial erstreckende Aussparung eingreift und daß die Länge der axial verlaufenden Aussparung dem maximalen axialen Verschiebeweg der Scheibe entspricht. Durch diese Anordnung wird stets gewährleistet, daß die Stellvorrichtung nicht von der Scheibe heruntergeschraubt werden kann. Desweiteren wird gewährleistet, daß das Schneidwerkzeug nicht in die am Deckel ausgebildete Austrittsöffnung des Einfüllschachtes einfährt, was unweigerlich zu Beschädigungen am Deckel führen würde.

In vorteilhafter Weise besteht die Stellvorrichtung aus einem inneren Zylinderteil und einem mit Abstand dazu angeordneten, äußeren Zylinderteil, wobei der zwischen den Zylinderteilen gebildete Ringraum zur axial verschiebbaren Aufnahme eines an der Scheibe ausgebildeten, zylindrischen Ansatzes dient. Hierdurch kann der zylindrische Ansatz der Scheibe auf einfache Weise bei Verdrehung der Stellvorrichtung in den zwischen den beiden Zylinderteilen gebildeten Ringraum eindringen. Hierdurch erhält man weiterhin eine sehr stabile Führung und Zentrierung der Scheibe auf der Stellvorrichtung trotz axialer Verschiebung der Scheibe. Dabei ist es vorteilhaft, daß die äußere Mantelfläche des inneren Zylinderteils mit einem Gewinde versehen ist, das mit einem an der inneren Mantelfläche eines an der Scheibe ausgebildeten zylindrischen Ansatzes vorgesehenen Gewindeteil zusammenwirkt. Ein derartiges, im Ringraum ausgebildetes Gewinde läßt sich besonders einfach herstellen, wenn die Verstelleinrichtung aus Kunststoff gespritzt wird.

In weiterer Ausgestaltung der Erfindung ist es vorteilhaft, daß die Wellenkupplung an ihrem antriebsseitigen Ende eine Mehrkantbohrung aufweist, die auf das obere, mit einem entsprechenden Mehrkant versehene Ende der Antriebswelle aufsetzbar ist und daß die Wellenkupplung an ihrem gegenüberliegenden Ende an der äußeren Mantelfläche mit einer Längsverzahnung versehen ist, die in Eingriff mit einer an dem Reib- oder Schneidwerkzeug an einem zylindrischen Ansatz entsprechend ausgebildeten Längsverzahnung steht und die eine gegenseitige axiale Verstellung des Reiboder Schneidwerkzeugs gegenüber der Wellenkupplung zuläßt. Hierdurch erhält man trotz drehmomentfester Verbindung eine leicht axial verschiebbare Verbindung zwischen der Wellenkupplung, der Antriebswelle des Motors und dem Raspel- oder Schneidwerkzeug. Durch diese Anordnung ist das Raspel- oder Schneidwerkzeug besonders leicht auswechselbar. Die Längsverzahnung dient gleichzeitig zur Zentrierung des Raspeloder Schneidwerkzeugs in ihrem unteren Abschnitt, wenn die Raspel- oder Schneidwerkzeuganordnung nicht in dem Behälter eingesetzt ist.

Um den Abstand zwischen der Scheibe und dem Schneidwerkzeug stufenlos verändern zu können, ist es vorteilhaft, daß das Schneidwerkzeug eine sich in Axialrichtung des Zapfens erstreckende Langlochöffnung aufweist, in die die gegen die Wirkung eines Federelements verstellbare, in der Scheibe ausgebildete Arretierungsklinke der Verriegelungsvorrichtung eingreift und daß die Länge der axial verlaufenden Langlochöffnung dem maximalen Verschiebeweg der Scheibe entspricht. Durch die Länge der Langlochöffnung wird festgelegt, ob überhaupt und wenn, wie groß der Schneidspalt zwischen der Schneide und der Oberfläche der kreisrunden Scheibe maximal einstellbar ist. Bei Verwendung eines Reibwerkzeugs, bei dem keine variable Einstellung der Höhe des Reibwerkzeuges gegenüber der Oberfläche der Scheibe erfolgen soll, ist nach einer Weiterbildung der Erfindung vorgesehen, daß die Langlochöffnung von einer Aussparung gebildet ist, deren axiale Länge so bemessen ist, daß die Arretierungsklinke in diese axial spielfrei eingreift. Hierdurch kann eine Verschiebung des Reibwerkzeugs gegenüber der Scheibe auch bei Verdrehung der Stellvorrichtung nicht erfolgen, da in diesem Fall durch die erfindungsgemäße Anordnung die Stellvorrichtung mit der Wellenkupplung gegenüber der Scheibe angehoben bzw. abgesenkt wird. Sobald also die Scheibe gegenüber einem Werkzeug in axialer Längsrichtung der Antriebswelle ortsfest fixiert ist, ist eine axiale Verstellung der Scheibe gegenüber dem Werkzeug nicht mehr möglich.

Damit das Raspel- oder Schneidwerkzeug stets axial ortsfest zur Antriebswelle, aber drehfest mit der Scheibe, der Stellvorrichtung und der Wellenkupplung gelagert ist, wird in einer Weiterbildung der Erfindung das Raspel- oder Schneidwerkzeug von einer mit dem Raspel- oder Schneidwerkzeug formschlüssig verbundenen Welle zentral durchdrungen, die im eingebauten Zustand der Raspel- oder Schneidwerkzeuganordnung im Behälter zwischen einem den Behälter verschließbaren Deckel und dem oberen Ende der Antriebswelle in ihrer axialen Bewegung begrenzt ist. Die mit dem zylindrischen Ansatz versehene Halterung wird zur Herstellungsvereinfachung an den aus Metall hergestellten Messerträger und an die Welle angespritzt, wodurch eine formschlüssige Verbindung des so gebildeten Raspel- oder Schneidwerkzeuges entsteht.

Um eine besonders gute Lagerung des Raspel- oder Schneidwerkzeugs unabhängig von der Scheibe im Behälter zu erhalten, ist am einen Ende im Deckel eine Lagerhülse befestigt, in die das deckelseitige Ende der Welle eingreift und am anderen Ende ist eine in der Wellenkupplung ausgebildete zentrale Bohrung vorgesehen, in der das antriebsseitige Ende der Welle drehbar gelagert ist. Auf der Wellenkupplung, die auf der Antriebswelle zentriert ist, stützen sich also unabhängig voneinander einerseits das Raspel- oder Schneidwerkzeug und andererseits die Scheibe mit der Verstellvorrichtung ab.

Zwei Ausführungsbeispiele der Erfindung sind in der Zeichnung dargestellt und werden anhand der Zeichnungen im folgenden näher erläutert. Es zeigen:

Fig. 1     eine perspektivische Ansicht einer erfindungsgemäßen Reib- oder Schneidwerkzeuganordnung für ein Haushaltsgerät mit verschiedenen Reib- und Schneidwerkzeugen, die wahlweise auf einer Scheibe montierbar sind, sowie einen Deckel mit einem Behälter, in dem die Reib- oder Schneidwerkzeuganordnung einsetzbar ist;

Fig. 2     einen Längsschnitt durch eine Schneidwerkzeuganordnung mit einer Stellvorrichtung zur Verstellung des Abstands der Scheibe zum Schneidwerkzeug;

Fig. 3     einen Längsschnitt durch eine Raspelwerkzeuganordnung, wobei anstelle des Schneidwerkzeugs in Fig. 2 ein Raspelwerkzeug eingesetzt wurde, das über eine Verriegelungsvorrichtung in Axialrichtung mit der Scheibe gesichert ist und

Fig. 4     einen Längsschnitt entlang der Linie II-II gemäß Fig. 2, in vergrößerter Darstellung.

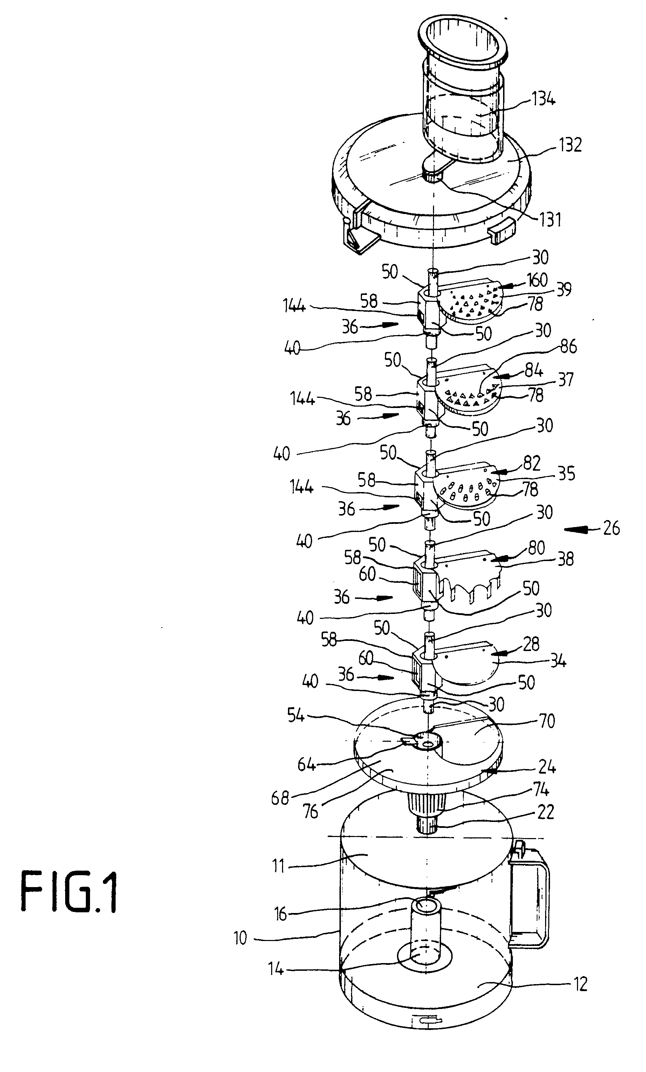

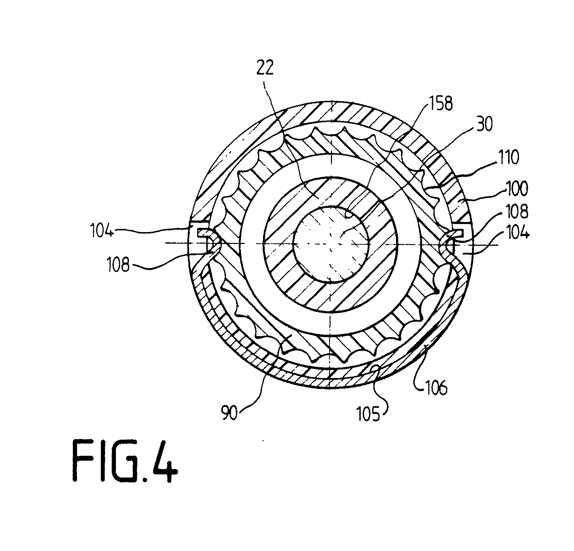

Zur Vermeidung von Wiederholungen werden in den Figuren 1 bis 4 für gleiche Bauteile gleiche Bezugszeichen gewählt.

In den Fig. 1 bis 3 ist mit 10 ein Behälter bezeichnet, an dessen Boden 12 ein in den Behälterinnenraum 11 ragender, zylindrischer Hals 14 angeformt ist, durch dessen Bohrung 16 sich von außen her das Ende einer, von einem in der Zeichnung nicht dargestellten Motor antreibbaren Antriebswelle 18 in den unteren Behälterabschnitt 154 erstreckt. Die Welle 18 weist ein Wellenende 20 auf, das als Mehrkantzapfen, beispielsweise als Sechskantzapfen, ausgebildet ist, auf dem eine Wellenkupplung 22 axial aufschiebbar ist, so daß zwischen der Wellenkupplung 22 und der Welle 18 eine drehfeste Verbindung hergestellt wird.

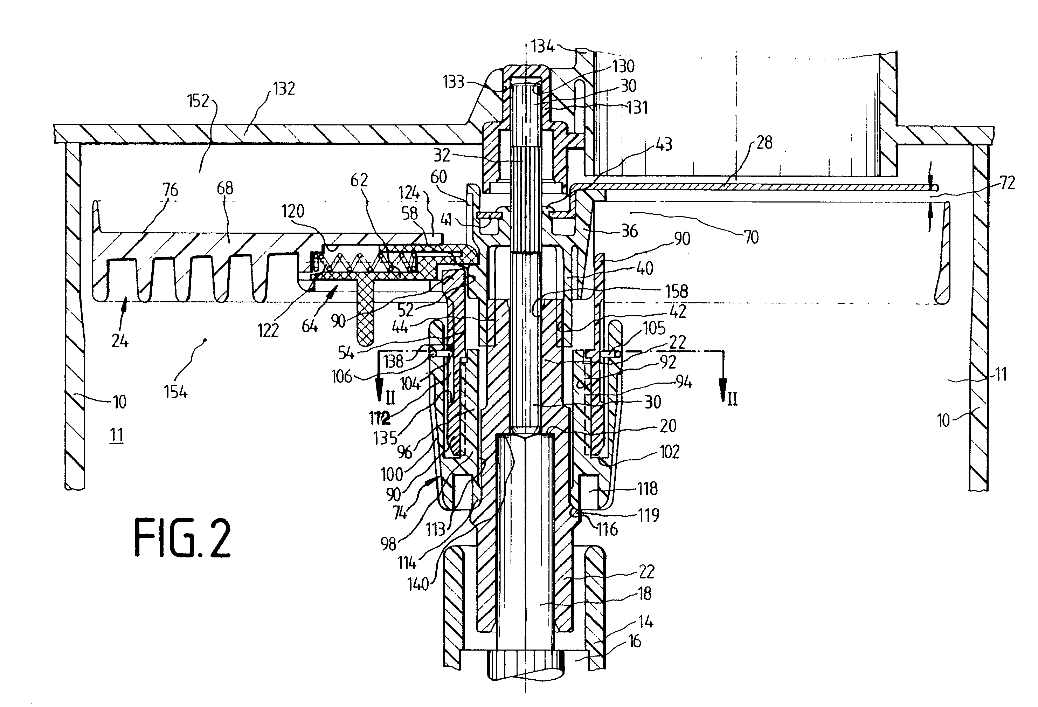

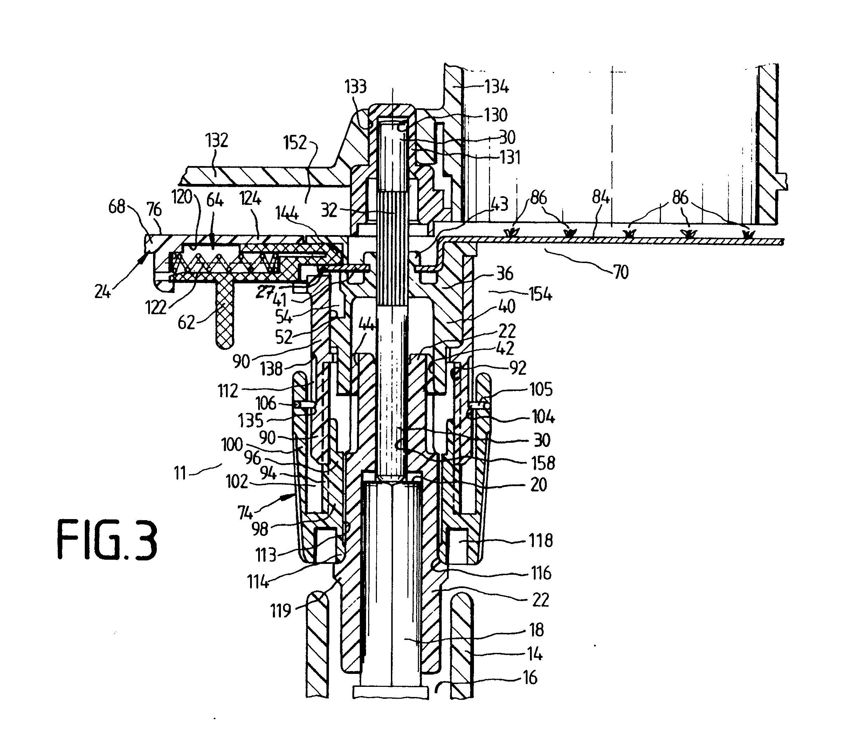

Im oberen Bereich des Behälters 10 ist eine Scheibe 24 montiert, die den Behälter in einen oberen und unteren Behälterabschnitt 152, 154 trennt, die über eine Stellvorrichtung 74 mit der Wellenkupplung 22 höhenverschiebbar verbunden ist und die zur Aufnahme von verschiedenen, in Fig. 1 dargestellten Raspel- oder Schneidwerkzeugen 160, 84, 82 oder 80, 28 dient. Die Reib- oder Schneidwerkzeuge 160, 84, 82 oder 80, 28 weisen eine Welle 30 mit einer Außenverzahnung 32 auf, auf die eine Halterung 36 aufgepreßt oder angespritzt ist, so daß zwischen der Welle 30 und der Halterung 36 eine formschlüssige Verbindung hergestellt ist. An das obere Ende der Halterung 36 ist eine einteilig ausgebildete Raspel- oder Messerklinge 39, 37, 35 oder 38, 34 befestigt, indem beispielsweise die Halterung 36 an die Klinge angeformt oder vernietet wurde. Die Klingen 39, 37, 35, 38, 34 sind im wesentlichen sichelförmig ausgebildet und umgreifen die Welle 30 im Bereich 41 ringförmig und sind dort zusätzlich über den Ringbund 43 mit der Halterung 36 formschlüssig verbunden. Die Halterung 36 weist einen in der Zeichnung nach unten gerichteten, zylindrischen Ansatz 40 mit einer als Längsverzahnung ausgebildeten Innenverzahnung 42 (Fig. 2 und 3) auf, über die die Reib- oder Schneidwerkzeuge 160, 84, 82 oder 80, 28 mit einer an der Wellenkupplung 22 entsprechend ausgebildeten Außenverzahnung 44 mit dieser drehfest verbindbar sind und gleichzeitig zwischen dem zylindrischen Ansatz 40 des Reib- oder Schneidwerkzeugs 160, 84, 82 oder 80, 28 und dem oberen Ende der Wellenkupplung 22 eine axial nach oben lösbare Verbindung geschaffen wird.

Die Halterung 36 ist in den Figuren 1 bis 3 mit gegenüberliegenden, winklig zueinander angeordneten, sich in Axialrichtung erstreckenden Anschlagflächen 50 ausgerüstet, die beim Einsetzen des Reib- oder Schneidwerkzeuges 160, 84, 82 oder 80, 28 in einer in der Scheibe vorgesehene Axialbohrung 54 an entsprechenden in der Bohrung 54 ausgebildeten Anschlagflächen 52 zur Anlage gelangen und die somit ebenfalls eine drehfeste Längsverzahnung zwischen dem Reib- oder Schneidwerkzeug 160, 84, 82 oder 80, 28 und der Scheibe 24 herstellen. Zwischen den gegenüberliegenden Anschlagflächen 50 ist bei den Schneidwerkzeugen 28, 80 (Fig. 2) eine weitere Anschlagfläche 58 mit einer Langlochöffnung 60 vorgesehen, in die eine Klinke 62 einer Verriegelungsvorrichtung 64 einrastet. In Fig. 3 ist bei Verwendung einer Raspelscheibe 84 die der Langlochöffnung 60 gemäß Fig. 2 entsprechende Aussparung 144 in ihrer axialen Länge so bemessen, daß die Klinke 62 spielfrei einrastet. Hierbei dient als unterer Anschlag für die Klinke 62 ein am inneren Bereich 41 des Raspelwerkzeugs 84 angeformter, sich radial nach außen erstreckender Blechlappen 27. Bei einem Schneidwerkzeug 28 gemäß Fig. 2 entfällt dieser. Die Ausführung der Aussparung 144 wird nur bei nicht verstellbaren Raspelwerkzeugen 160, 84 und 82 verwendet.

Die Verriegelungsvorrichtung 64 ist in der Trägerscheibe 24 integriert, die aus einer horizontal verlaufenden Kreisplatte 68 mit einer Öffnung 70 und einer Stellvorrichtung 74 besteht. Im eingebauten Zustand des Reib- oder Schneidwerkzeugs 160, 84, 82 oder 80, 28 deckt die Klinge 39, 37, 35, 38, 34 die Öffnung 70 jeweils soweit ab, daß bei der Messerausführung nach Fig. 2 nur ein kleiner Spalt 72 zwischen der Klinge 34, 38 und der Oberfläche 76 der Scheibe 24 verbleibt, während bei den Reibklingen 39, 37 und 35 nach Fig. 3 die Öffnung 70 ganz verschlossen wird und die Nahrungsmittel nur über die Reiböffnungen 78 in den unteren Abschnitt des Behälters 10 gelangen.

Anstelle des in Fig. 2 dargestellten Schneidwerkzeuges 28 kann auch ein Schneidwerkzeug 80 zur Herstellung von Pommes Frites oder andere Reib- oder Schneidwerkzeuge 160, 84, 82 auf der Scheibe 24 montiert werden. Ein Raspelwerkzeug 84 ist in Fig. 3 auf der Scheibe 24 montiert, an dem deutlich die Raspeln 86 erkennbar sind. Wichtig ist jedoch, daß alle Reib- oder Schneidwerkzeuge 160, 84, 82 oder 80, 28 mit ihren Halterungen 36 bezüglich ihrer Anschlußmaße so ausgelegt sind, daß sie gegeneinander je nach Verwendungszweck ausgetauscht und in der Scheibe 24 montiert werden können.

Wie aus den Fig. 2 und 3 hervorgeht, weist die Scheibe 24 an ihrer Unterseite einen zylindrischen Ansatz 90 auf, der mit einem Innengewinde 92 versehen ist, auf das eine Buchse 96 mit ihrem Außengewinde 94 aufschraubbar ist. Die Buchse 96 ist Teil der Stellvorrichtung 74 und dient bei Verdrehung zur axialen Verschiebung der Scheibe 24. Die Stellvorrichtung 74 besteht aus einem inneren Zylinderteil 98 und einem, mit Abstand dazu angeordneten, äußeren Zylinderteil 100, so daß zwischen den beiden Zylinderteilen 98 und 100 ein Ringraum 102 gebildet wird, der zur Aufnahme des zylindrischen Ansatzes 90 der Scheibe 24 dient.

Wie aus den Fig. 2, 3 und 4 hervorgeht, ist im oberen Bereich der Stellvorrichtung 74 eine im Zylinderteil 100 verlaufende, ringförmige Nut 105 vorgesehen, in die ein Arretierungsring 106 einsetzbar ist. Die beiden gegenüberliegenden Enden des Arretierungsrings 106 weisen Nasen 108 auf, die über an dem Zylinderteil 100 ausgebildete Schlitzöffnungen 104 in auf der Außenseite des zylindrischen Ansatzes 90 der Scheibe 24 vorgesehene Rastnuten 110 einrasten und somit beim Drehvorgang der Stellvorrichtung 74 einen entsprechenden Widerstand hervorrufen, der ein leichteres und merklicheres Einstellen der Schneidhöhe hervorruft. Jede Rastnut 110 kann beispielsweise einem - durch Markierung an dem Zylinderteil 100 und der Scheibe 24 angedeutet - Einstellschritt entsprechen. Da der Arretierungsring 106 federelastisch ausgebildet ist, klemmt er sich in den beiden gegenüberliegenden Schlitzöffnungen 104 fest. Wird die Stellvorrichtung 74 gedreht, so verstellt sich diese relativ gegenüber dem zylindrischen Ansatz 90 in Axialrichtung der Welle 30, wobei die beiden Nasen 108 in den Rastnuten 110 geführt sind. Die Länge der Rastnuten 110 entsprechen dem maximalen Stellweg der Scheibe 24 und somit der maximalen Spaltbreite zwischen dem Schneidwerkzeug 28, 80 und der Oberfläche 76 der Scheibe 24.

Am unteren Ende des in den Fig. 2 und 3 dargestellten, inneren Zylinderteils 98 der Stellvorrichtung 74 ist an der Innenfläche der Bohrung 113 ein Arretierungsring 114 in Form eines angeformten Ringwulstes vorgesehen, der in eine an der Wellenkupplung 22 vorgesehene Ringnut 116 eingreift. Hierdurch erhält man eine stabile Arretierung bzw. Sicherung der Stellvorrichtung 74 in Axialrichtung der Antriebswelle 18, wobei die Stellvorrichtung 74 gegenüber der Wellenkupplung 22 drehbar ist. Der am unteren Ende der Buchse 96 ausgebildete Ringraum 118 gestattet ein elastisches Aufklipsen der Stellvorrichtung 74 auf die Wellenkupplung 22. Die Stellvorrichtung stützt sich in Betrieb über den an der Wellenkupplung 22 ausgebildeten Ringbund 119 nach unten ab.

Die Klinke 62 der Verriegelungsvorrichtung 64 ist in den Fig. 2 und 3 in einer viereckigen Langlochöffnung 120 gegen die Wirkung einer Feder 122 verstellbar gegenüber der Halterung 36 gelagert. Die Langlochöffnung 120 befindet sich in der Kreisplatte 68 der Scheibe 24. Die Langlochöffnung 120 dient zur Aufnahme der Klinke 62 und ist mittels einer Platte 124 abgedeckt, so daß die Klinke 62 radial von innen her in die Langlochöffnung 120 eingesetzt werden kann.

Das obere Ende des Zapfens 30 ist in den Fig. 2 und 3 in einer Bohrung 130 einer Lagerhülse 131 aufgenommen, die in einer Ausnehmung 133 eines Deckels 132 befestigt ist. Der Deckel 132 verschließt den Behälter 10 von oben und sichert die Welle 30 gegen axiales Verschieben zwischen der Lagerhülse 131 und dem Wellenende 20.

Soll beispielsweise die Schnittbreite des Schneidwerkzeuges 28 nach Fig. 2 verändert werden, so braucht lediglich die Stellvorrichtung 74 gedreht werden und der zylindrische Ansatz 90 der Scheibe 24 bewegt sich je nach Drehrichtung aus oder in den Ringraum 102 der Stellvorrrichtung 74, so daß der Abstand zwischen dem Schneidwerkzeug 28 und der Oberfläche 76 der Scheibe 24 verkleinert bzw. vergrößert wird, sobald die Anordnung im Behälter 10 montiert und vom Deckel 132 verschlossen ist. Um jeweils die gewünschte Einstellung genau vornehmen zu können, kann beispielsweise auf der Außenoberfläche der Stellvorrichtung 74 eine Skaleneinteilung vorgesehen sein, die die genaue Schnittbreite entsprechend angibt. Durch Drehen der Stellvorrichtung 74 zur Erzielung einer Schnittbreitenverengung wird die Scheibe 24 solange verstellt, bis der untere Vorsprung 135 der Aussparung 112 gegen die Nase 108 des Arretierungsringes 106 zur Anlage kommt. In Fig. 3 ist eine Verstellung der Scheibe nicht möglich, da sie über die Klinke 62 mit dem Reibwerkzeug 82, 84, 160 verbunden ist

Der Deckel 132 ist in der Fig. 2 und 3 über eine in der Zeichnung nicht dargestellte Bajonetteinrichtung fest mit dem Behälter 10 verbindbar. Auf der Oberseite des Deckels 132 befindet sich ein Einfüllschacht 134, über den das zu zerkleinernde Gut dem Reib-oder Schneidwerkzeug 160, 84, 82 oder 80, 28 von außen zugeführt werden kann.

Soll beispielsweise das Schneidwerkzeug 28 gegen ein anderes Schneidwerkzeug 80 ausgetauscht werden, so braucht der Deckel 132 nach Lösen der Bajonetteinrichtung durch Drehen des Deckels 132 nur abgenommen zu werden, um dann das Schneidwerkzeug 28 gemeinsam mit der Halterung 36 von der Wellenendekupplung 22 abzuziehen. Danach läßt sich ein anderes Reib- oder Schneidwerkzeug 80, 82, 84, 160 von oben her in die Bohrung 158 der Wellenkupplung 22 einführen. Danach kann wieder der Deckel 132 von oben her auf den Behälter 10 aufgesetzt werden, wobei die Bohrung 130 das obere Ende des Zapfens 30 aufnimmt.

Wie aus Fig. 2 hervorgeht, liegt die Ringstufe 140 der Wellenkupplung 22 auf der Stirnfläche des Wellenendes 20 der Antriebswelle 18 stets an, damit sich die Scheibe 24 über die Stellvorrichtung 74 an der Wellenkupplung 22 abstützen kann. Bei Verwendung von Reibscheiben 82, 84, 160 gemäß Fig. 3 hingegen stützt sich die Scheibe 24 über die Klinke 62 und die Halterung 36 an der Welle 30 ab, die stets auf dem Wellenende 20 der Antriebswelle 18 aufliegt. Wird bei Verwendung einer Reibscheibe 82, 84, 160 die Stellvorrichtung 74 gedreht (Fig. 3), so kann sich lediglich die Wellenkupplung 22 je nach Drehrichtung nach unten oder oben verschieben, bis die Nase 108 gegen den unteren oder oberen Vorsprung 135, 138 des zylindrischen Ansatzes 90 zur Anlage kommt. Eine weitere Verstellung der Stellvorrichtung 74 ist dann nicht möglich.

**Patentansprüche**

1. Raspel- oder Schneidwerkzeuganordnung (26) zum Zerkleinern von Nahrungsmitteln, insbesondere für Haushaltsgeräte, die mittels einer Wellenkupplung (22) auf einer einen Behälter (10) vom Boden (12) her durchdringenden Antriebswelle (18) drehfest aufsetzbar ist und die aus einer den Behälter (10) in einen oberen und unteren Behälterabschnitt (152, 154) trennenden Scheibe (24), einem in einer Ausnehmung (70) der Scheibe (24) ausgebildeten Raspel- oder Schneidwerkzeug (28, 80, 82, 84, 160) und einer den Abstand der Scheibe (24) gegenüber dem Schneidwerkzeug (28, 80,) einstellbaren Stellvorrichtung (74) besteht, **dadurch gekennzeichnet,** daß die Stellvorrichtung (74) in axialer Längsrichtung auf der Wellenkupplung (22) ortsfest und drehbar gelagert und gleichzeitig über eine als Verstelleinrichtung dienende Schraubverbindung (92, 94) mit der Scheibe (24) verbunden ist, daß sowohl die Wellenkupplung (22) als auch die Scheibe (24) über jeweils eine mit dem Raspel- oder Schneidwerkzeug (28, 80, 82, 84, 160) zusammenwirkende Längsverzahnung (42, 44 und 50, 52) in Eingriff stehen und daß sich das Raspel- oder Schneidwerkzeug (28, 80, 82, 84, 160) an der Antriebswelle (18) in axialer Richtung abstützt und gegenüber der Antriebswelle (18) ortsfest gehalten wird.

2. Anordnung nach Anspruch 1, **dadurch gekennzeichnet,** daß zwischen der Scheibe (24) und dem Raspelwerkzeug (82, 84, 160) eine Verriegelungsvorrichtung (64) vorgesehen ist, die das Raspelwerkzeug (82, 84, 160) gegenüber der Scheibe (24) axial sichert und daß bei Verdrehung der Stellvorrichtung (74) die Wellenkupplung (22) axial verschiebbar ist.

3. Anordnung nach Anspruch 1 oder 2, **dadurch gekennzeichnet,** daß die Stellvorrichtung (74) an der äußeren Mantelfläche der Wellenkupplung (22) zentriert ist und daß an der Stellvorrichtung (74) ein Ringwulst (114) ausgebildet ist, der in eine an der Wellenkupplung (22) ausgebildete Ringnut (116) eingreift.

4. Anordnung nach Anspruch 1 oder 2,
**dadurch gekennzeichnet,**
daß an der Stellvorrichtung (74) ein Arretierungsring (106) befestigt ist, der mit zumindestens einer radial nach innen gerichteten Nase (108) versehen ist, die in eine an der Scheibe (24) sich axial erstreckende Aussparung (112) eingreift und daß die Länge der axial verlaufenden Aussparung (112) dem maximalen axialen Verschiebeweg der Scheibe (24) entspricht.

5. Anordnung nach Anspruch 1 oder 2,
**dadurch gekennzeichnet,**
daß die Stellvorrichtung (74) aus einem inneren Zylinderteil (98) und einem mit Abstand dazu angeordneten, äußeren Zylinderteil (100) besteht und daß der zwischen den Zylinderteilen (98, 100) gebildete Ringraum (102) zur axial verschiebbaren Aufnahme eines an der Scheibe (24) ausgebildeten, zylindrischen Ansatzes (90) dient.

6. Anordnung nach Anspruch 1 oder 2,
**dadurch gekennzeichnet,**
daß die äußere Mantelfläche des inneren Zylinderteils (98) mit einem Gewinde (94) versehen ist, das mit einem an der inneren Mantelfläche des an der Scheibe (24) ausgebildeten zylindrischen Ansatzes (90) vorgesehenen Gewindeteil (92) zusammenwirkt.

7. Anordnung nach Anspruch 1 oder 2,
**dadurch gekennzeichnet,**
daß die Wellenkupplung (22) an ihrem antriebsseitigen Ende eine Mehrkantbohrung aufweist, die auf das obere, mit einem entsprechenden Mehrkant versehene Ende der Antriebswelle (18) aufsetzbar ist und daß die Wellenkupplung (22) an ihrem gegenüberliegenden Ende an der äußeren Mantelfläche mit einer Längsverzahnung (44) versehen ist, die in Eingriff mit einer an dem Reib- oder Schneidwerkzeug (28, 80, 82, 84, 160) an einem zylindrischen Ansatz (40) entsprechend ausgebildeten Längsverzahnung (42) steht und die eine gegenseitige axiale Verstellung des Reib- oder Schneidwerkzeugs (28, 80, 82, 84, 160) gegenüber der Wellenkupplung (22) zuläßt.

8. Anordnung nach Anspruch 1 oder 2,
**dadurch gekennzeichnet,**
daß das Schneidwerkzeug (28, 80) eine sich in Axialrichtung des Zapfens (30) erstreckende Langlochöffnung (60) aufweist, in die eine gegen die Wirkung eines Federelements (122) verstellbare, in der Scheibe (24) ausgebildete Arretierungsklinke (62) der Verriegelungsvorrichtung (64) eingreift und daß die Länge der axial verlaufenden Langlochöffnung (60) dem maximalen Verschiebeweg der Scheibe (24) entspricht.

9. Anordnung nach Anspruch 2,
**dadurch gekennzeichnet,**
daß das Reibwerkzeug (82, 84, 160) eine Aussparung (144) aufweist, in die die in der Scheibe (24) ausgebildete Arretierungsklinke (62) der Verriegelungsvorrichtung (64) eingreift und daß die Länge der axial verlaufenden Aussparung (144) so bemessen ist, daß die Arretierungsklinke axial spielfrei eingreift.

10. Anordnung nach Anspruch 1 oder 2,
**dadurch gekennzeichnet,**
daß das Raspel- oder Schneidwerkzeug (28, 80, 82, 84, 160) von einer Welle (30) zentral durchdrungen wird, die mit dem Raspel- oder Schneidwerkzeug formschlüssig verbunden ist und daß die Welle (30) im eingebauten Zustand der Raspel- oder Schneidwerkzeuganordnung im Behälter (10) zwischen einem den Behälter (10) verschließbaren Deckel (132) und dem oberen Ende der Antriebswelle (18) axial unverschiebbar gelagert ist.

11. Anordnung nach Anspruch 10,
**dadurch gekennzeichnet,**
daß im Deckel (132) eine Lagerhülse (131) befestigt ist, in der das deckelseitige Ende der Welle (30) drehbar gelagert ist und daß die Welle (30) eine in der Wellenkupplung (22) zentrale Bohrung (158) durchdringt, in der das antriebsseitige Ende der Welle (30) drehbar gelagert ist.

**Claims**

1. A shredding or slicing tool arrangement (26) for chopping food material, in particular for household appliances, which is mountable by way of a shaft coupling (22) so as to be unrotatable on a drive shaft (18) that extends from the bottom (12) through a bowl (10), and which is composed of a disc (24) subdividing the bowl (10) into an upper and a lower bowl section (152, 154), a shredding or slicing tool (28, 80, 82, 84, 160) designed in a recess (70) of the disc (24), and of an adjusting device (74) adapted to adjust the distance of the disc (24) relative to the slicing tool (28, 80), **characterized** in that the adjusting device (74) is stationarily and rotatably supported in axial longitudinal direction on the shaft coupling (22) and simultaneously is coupled to the disc (24) via a screw coupling serving as an adjusting means (92, 94), in that both the shaft coupling (22) and the disc (24) are in engagement through each one elongated toothed member (42, 44 and 50, 52) coacting with the shredding or slicing tool (28, 80, 82, 84, 160), and in that the shredding or slicing tool (28, 80, 82, 84, 160) takes support on the drive shaft (18) in axial direction and is held stationarily in relation to the drive shaft (18).

2. An arrangement as claimed in claim 1, **characterized** in that a locking device (64) is provided between the disc (24) and the shredding tool (82, 84, 160) which secures the shredding tool (82, 84, 160) axially in position relative to the disc (24), and in that the shaft coupling (22) is axially displaceable on rotation of the adjusting device (74).

3. An arrangement as claimed in claim 1 or 2, **characterized** in that the adjusting device (74) is centered on the outward peripheral surface of the shaft coupling (22), and in that an annular torus (114) is designed on the adjusting device (74) which engages into an annular torus (116) designed on the shaft coupling (22).

4. An arrangement as claimed in claim 1 or 2, **characterized** in that a locking ring (106) is attached to the adjusting device (74) which is provided with at least one radially inwardly directed nose (108) engaging into a recess (112) which extends axially on the disc (24), and in that the length of the axially extending recess (112) corresponds to the maximum axial displacement travel of the disc (24).

5. An arrangement as claimed in claim 1 or 2, **characterized** in that the adjusting device (74) is composed of a cylindrical inner portion (98) and a cylindrical outer portion (100) spaced therefrom, and in that the annular space (102) formed between the cylindrical portions (98, 100) serves to axially slidably accommodate a cylindrical flange (90) designed on the disc (24).

6. An arrangement as claimed in claim 1 or 2, **characterized** in that the outward peripheral surface of the cylindrical inner portion (98) is furnished with a thread (94) which coacts with a threaded portion (92) provided on the inward peripheral surface of the cylindrical flange (90) designed on the disc (24).

7. An arrangement as claimed in claim 1 or 2,

**characterized** in that the drive-side end of the shaft coupling (22) comprises a polygonal bore which is adapted to be mounted on the upper end of the drive shaft (18) which is provided with a mating polygonal shape, and in that the shaft coupling (22) is furnished with an elongated toothed member (44) on the outward peripheral surface of its opposed end which is in engagement with an elongated toothed member (42) matingly designed on a cylindrical flange (40) on the shredding or slicing tool (28, 80, 82, 84, 160) and which permits mutual axial adjustment of the shredding or slicing tool (28, 80, 82, 84, 160) in relation to the shaft coupling (22).

8. An arrangement as claimed in claim 1 or 2, **characterized** in that the slicing tool (28, 80) comprises an elongated opening (60) which extends in axial direction of the pin (30), into which a locking pawl (62) of the locking device (64) is engaging, the said locking pawl being designed in the disc (24) and being adjustable in opposition to the effect of a spring element (122), and in that the length of the axially extending elongated opening (60) corresponds to the maximum displacement travel of the disc (24).

9. An arrangement as claimed in claim 2, **characterized** in that the shredding tool (82, 84, 160) includes a recess (144) into which the locking pawl (62) of the locking device (64) designed in the disc (24) engages, and in that the length of the axially extending recess (144) is sized such that the locking pawl engages therein axially without clearance.

10. An arrangement as claimed in claim 1 or 2, **characterized** in that the shredding or slicing tool (28, 80, 82, 84, 160) is centrally penetrated by a shaft (30) which is in form-locking connection with the shredding or slicing tool, and in that the shaft (30) is axially undisplaceably supported between a cover (132) adapted to close the bowl (10) and the upper end of the drive shaft (18) when the shredding or slicing tool arrangement is in its installed condition in the bowl (10).

11. An arrangement as claimed in claim 10, **characterized** in that a bearing sleeve (131) is attached in the cover (132) in which the cover-side end of the shaft (30) is rotatably supported, and in that the shaft (30) extends through a bore (158) placed centrally in the shaft coupling (22), in which bore the drive-side end of the shaft (30) is rotatably supported.

## Revendications

1. Ensemble formant outil à râper ou à couper (26) pour la fragmentation d'aliments, notamment destiné à des appareils ménagers, qui peut être monté avec liaison en rotation fixe, au moyen d'un accouplement d'arbre (22), sur un arbre d'entrainement (18) traversant un récipient (10) par le fond (12), et qui est constitué par un disque (24) séparant le récipient (10) en une partie de récipient supérieure et inférieure (152, 154), par un outil à râper ou à couper (28, 80, 82, 84, 160) formé dans un évidement (70) du disque (24), et par un dispositif de réglage (74) destiné à régler l'écartement entre le disque (24) et l'outil à couper (28, 80), caractérisé en ce que le dispositif de réglage (74) est monté tournant et en position fixe dans la direction longitudinale axiale sur l'accouplement d'arbre (22), en étant simultanément lié au disque (24) par une liaison à vis (92, 94) faisant office de dispositif de déplacement de réglage, en ce qu'aussi bien l'accouplement d'arbre (22) que le disque (24) sont chacun en prise avec une denture longitudinale (42, 44 et 50, 52) coopérant avec l'outil à râper ou à couper (28, 80, 82, 84, 160), et en ce que l'outil à râper ou à couper (28, 80, 82, 84, 160) s'appuie sur l'arbre d'entrainement (18) en direction axiale et est maintenu en position fixe par rapport à l'arbre d'entrainement (18).

2. Ensemble selon la revendication 1, caractérisé en ce qu'entre le disque (24) et l'outil à râper (82, 84, 160) est prévu un dispositif de verrouillage (64) qui bloque axialement l'outil à râper (82, 84, 160) par rapport au disque (24), et en ce que lors d'une rotation du dispositif de réglage (74), l'accouplement d'arbre (22) peut se déplacer axialement.

3. Ensemble selon la revendication 1 ou 2, caractérisé en ce que le dispositif de réglage (74) est centré sur la surface périphérique extérieure de l'accouplement d'arbre (22), et en ce que sur le dispositif de réglage (74) est formé un bourrelet annulaire (114) qui s'engage dans une rainure annulaire (116) formée sur l'accouplement d'arbre (22).

4. Ensemble selon la revendication 1 ou 2, caractérisé en ce que sur le dispositif de réglage (74) est fixée une bague d'arrêt (106) qui est pourvue d'au moins un nez (108) qui est dirigé radialement vers l'intérieur, et qui s'engage dans une encoche (112) s'étendant axialement sur le disque (24), et en ce que la longueur de l'encoche (112) s'étendant axialement, correspond à la course déplacement axial maximale du disque (24).

5. Ensemble selon la revendication 1 ou 2, caractérisé en ce que le dispositif de réglage (74) se compose d'une partie formant cylindre intérieur (98) et, disposée à distance de celle-ci, d'une partie formant cylindre extérieur (100), et en ce que l'espace annulaire (102) constitué entre les deux parties formant cylindres (98, 100) est destiné à loger avec possibilité de coulissement axial, une embase cylindrique (90) formée sur le disque (24).

6. Ensemble selon la revendication 1 ou 2, caractérisé en ce que la surface périphérique extérieure de la partie formant cylindre intérieur (98) est pourvue d'un filetage (94) qui coopère avec un filetage (92) réalisé sur la surface périphérique intérieure de l'embase cylindrique (90) formée sur le disque (24).

7. Ensemble selon la revendication 1 ou 2, caractérisé en ce que l'accouplement d'arbre (22) présente à son extrémité située côté entrainement, un alésage polygonal qui peut être engagé sur l'extrémité supérieure de l'arbre d'entrainement (18) pourvue d'une partie polygonale correspondante, et en ce que l'accouplement d'arbre (22) est pourvu, à son extrémité opposée et sur la surface périphérique extérieure, d'une denture longitudinale (44) qui est en prise avec une denture longitudinale (42) formée de manière correspondante sur une embase cylindrique (40) de l'outil à râper ou à couper (28, 80, 82, 84, 160), et qui autorise un déplacement axial réciproque de l'outil à râper ou à couper (28, 80, 82, 84, 160) par rapport à l'accouplement d'arbre (22).

8. Ensemble selon la revendication 1 ou 2, caractérisé en ce que l'outil à couper (28, 80) comporte une ouverture en forme de trou oblong (60) s'étendant dans la direction axiale du tourillon (30) et dans laquelle vient s'engager le cliquet d'arrêt (62) du dispositif de verrouillage (64), réalisé dans le disque (24) et susceptible d'être déplacé à l'encontre de l'action d'un élément à ressort (122), et en ce que la longueur de l'ouverture en forme de trou oblong (60) s'étendant en direction axiale correspond à la course de déplacement maximale du disque (24).

9. Ensemble selon la revendication 2,

caractérisé en ce que l'outil à râper (82, 84, 160) comporte une encoche (144) dans laquelle vient s'engager le cliquet d'arrêt (62) du dispositif de verrouillage (64), réalisé dans le disque (24), et en ce que la longueur de l'encoche (144) s'étendant en direction axiale présente une dimension telle que le cliquet d'arrêt s'y engage sans jeu axial.

10. Ensemble selon la revendication 1 ou 2, caractérisé en ce que l'outil à râper ou à couper (28, 80, 82, 84, 160) est traversé au centre, par un arbre (30) qui est relié par complémentarité de forme à l'outil à râper ou à couper, et en ce que l'arbre (30), à l'état monté de l'ensemble formant outil à râper ou à couper dans le récipient (10), est monté sans possibilité de déplacement axial, entre un couvercle (132) susceptible de fermer le récipient (10) et l'extrémité supérieure de l'arbre d'entrainement (18).

11. Ensemble selon la revendication 10, caractérisé en ce que dans le couvercle (132) est fixée une douille formant palier (131) dans laquelle est montée tournante l'extrémité côté couvercle de l'arbre (30), et en ce que l'arbre (30) traverse un alésage central (158) dans l'accouplement d'arbre (22), dans lequel est montée tournante l'extrémité côté entrainement de l'arbre (30).

FIG.1

FIG.2

FIG.3

EP 0 293 580 B1

FIG.4